(19) Europäisches Patentamt
European Patent Office
Office européen des brevets

(11) Numéro de publication : **0 046 473**
**B1**

(12) # FASCICULE DE BREVET EUROPÉEN

(45) Date de publication du fascicule du brevet : **02.05.84**

(51) Int. Cl.³ : **C 04 B 35/66**, C 21 B 7/12

(21) Numéro de dépôt : **80630036.4**

(22) Date de dépôt : **22.08.80**

(54) **Composition mixte pour le bouchage de trous de coulée de hauts-fourneaux, fours électriques et autres appareils de fusion.**

(43) Date de publication de la demande :
**03.03.82 Bulletin 82/09**

(45) Mention de la délivrance du brevet :
**02.05.84 Bulletin 84/18**

(84) Etats contractants désignés :
**BE DE FR GB IT LU**

(56) Documents cités :
**DE-A- 2 553 084**
**DE-B- 1 646 456**
**DE-B- 2 624 288**
**DE-B- 2 723 792**
**FR-A- 2 305 409**

(73) Titulaire : **GENERAL GUNNING S.A.**
**37, rue Notre-Dame**
**Luxembourg (LU)**

(72) Inventeur : **Kirsch, Norbert**
**2, rue Birthon**
**Gasperich (LU)**

(74) Mandataire : **Schmitz, Jean-Marie et al**
**Office Dennemeyer S.a.r.l. 21-25 Allée Scheffer P.O. Box 41**
**L-2010 Luxembourg (LU)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 046 473 B1

# Composition mixte pour le bouchage de trous de coulée de hauts-fourneaux, fours électriques et autres appareils de fusion

La présente invention concerne des compositions mixtes pour le bouchage de trous de coulée de hauts-fourneaux, fours électriques et autres appareils de fusion, contenant des éléments minéraux de base, des matières carbonées et des liants.

De nombreuses compositions existent actuellement dans ce type de matériau. On trouve notamment :

— Des masses dites au goudron :

constituées par un mélange de + ou – 70 % de sable argileux, 10 % de charbon ou de coke et 20 % de goudron.

— Des masses dites aux résines constituées :

Soit d'un mélange de + ou – 70 % de sable et d'argile, de 10 % de charbon ou de cocke broyé et d'un liant composé par seulement 15 à 17 % de goudron additionné de 3 à 4 % d'une résine liquide.

Soit d'un mélange de 70 à 85 % d'un élément minéral, un agrégat réfractaire à haute résistance mécanique, une matière à haute teneur en carbone et de 15 à 30 % d'un liant hydro-carboné. Ce liant hydro-carboné étant constitué par un dérivé d'hydrocarbure et par une résine thermodurcissable.

Tous ces matériaux présentent les inconvénients suivants :

— Masses dites au goudron : La cokéfaction relativement lente de la masse dégage des vapeurs de goudron nocives. Les incuits du goudron provoquent des projections de flammes et de fonte dangereuses.

— Masses dites aux résines : moins de risques de projection de flamme et de fonte. Cependant, les dégagements de vapeurs et de fumées nocives subsistent au niveau du trou de coulée et de la machine à boucher. De plus, ces matériaux sont de qualités et compositions irrégulières du fait des produits entrant dans la composition de leurs différents liants et leur conservation dans le temps est très limitée.

Le brevet FR-A- 2 305 409 décrit des masses réfractaires comprenant des éléments minéraux à base de magnésie et de chromite et on utilise comme liant un mélange d'acide borique et un polyalcool soluble dans l'eau, par exemple de la glycérine pour améliorer la liaison et la résistance de ces masses réfractaires.

La présente invention permet d'élaborer un mélange de bouchage ne présentant plus aucun inconvénient d'utilisation en ce qui concerne l'efficacité du bouchage, les projections de flammes et de fonte et les dégagements nocifs de fumées et de gaz.

Elle présente donc toutes les garanties recherchées jusqu'alors aussi bien en ce qui concerne la sécurité, l'hygiène et la conservation.

La composition de la masse de bouchage selon la présente invention se caractérise en ce qu'elle est formée de 70 à 80 % d'éléments minéraux de base tels que argiles réfractaires ou agrégats réfractaires à haute résistance mécanique et pyroscopique, 5 à 15 % d'une matière carbonée d'origine végétale dont les éléments volatils nocifs ont été éliminés, 15 à 25 % de liants composés de glycérol et d'accélérateur de prise complétant l'effet de liaison du glycérol. Selon un mode de réalisation préféré les liants se répartissent de la manière suivante :

— glycérol 14 à 20 %
— accélérateur de prise 1 à 5 %.

Les accélérateurs de prise pourront être selon l'importance des appareils à boucher :

Soit un liant organique de la famille des amylacés.

Soit un liant chimique tel que phosphate d'alumine seul ou combiné avec le liant organique ci-avant.

## Présentation des constituants

A. Les éléments minéraux peuvent être composés :

1. D'une argile réfractaire du type kaolinite ayant une teneur en alumine comprise entre 35 et 45 % d'alumine et un point de fusion de 1 670 °C.

2. D'agrégats divers tels que :

— Un sable silico-alumineux ayant une teneur en alumine comprise entre 6 à 9 % et un point de fusion voisin de 1 650 °C.

— Ou un silicate d'alumine calciné d'une teneur en alumine de 40/44 % et un point de fusion de 1 680 °C.

— Ou une magnésie, une dolomie, une bauxite, un corindon, un carbure de silicium.

— Ou une composition mixte faisant intervenir l'un ou l'autre de ces agrégats en fonction de ses qualités physiques.

B. La matière carbonée :

On retiendra de préférence une matière carbonée d'origine végétale telle que le charbon de bois. Ce matériau qui contient peu d'impuretés et peu de cendres est d'une composition régulière.

Il a été choisi pour créer une porosité à l'intérieur de la masse et minimiser les effets des différentes tensions dans le matériau au cours de son utilisation.

C. Les liants :

La liaison des matériaux sera obtenue par la combinaison d'un glycérol additionné d'un accélérateur de prise.

1. Produit de synthèse de la famille des glycérols :

L'élément novateur du présent brevet est en effet la glycérine. Il existe deux types de glycérines qui peuvent toutes deux entrer dans la composition de la masse.

Une glycérine naturelle obtenue par hydrolyse des matières grasses.

— Une glycérine de synthèse obtenue à partir du propylène provenant lui-même du vapocraquage de fractions légères du pétrole (Naphta).

L'expression glycérol telle qu'elle est utilisée dans la description et les revendications englobe ces deux types de glycérines. C'est cependant ce deuxième type de glycérine que nous retiendrons.

Cette matière est obtenue par réaction entre le propylène et le chlore pour donner le chlorure d'allyle, lequel, par action de l'acide hypochloreux, se transforme en dichlorhydrine puis en épichlorhydrine : celle-ci est ensuite hydrolisée par la soude en glycérine. On observe les réactions suivantes :

$$CH_2 = CH—CH_3 + Cl_2 \longrightarrow CH_2 = CH—CH_2Cl + HCl$$

$$CH_2 = CH—CH_2Cl = HOCl \longrightarrow CH_2OH—CHCl—CH_2Cl$$

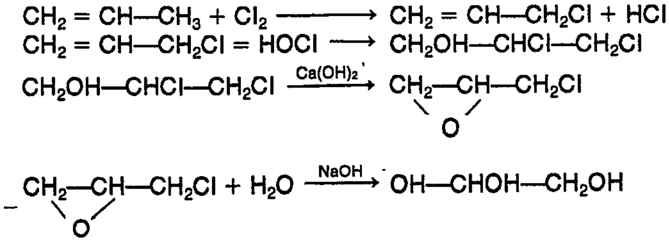


La glycérine est un liquide incolore, inodore et sirupeux de saveur douce.

Elle est hygroscopique, miscible à l'eau et à l'alcool, peu soluble dans l'éther, les solvants chlorés, le sulfure de carbone et les huiles.

Ses principales caractéristiques sont les suivantes :

| | | |
|---|---|---|
| — Poids moléculaire | | 92,09 |
| — Poids spécifique à 20 °C | $g/cm^3$ | 1,261 |
| — Point de fusion | °C | 18 |
| — Point d'ébullition sous 1 013 mbars | °C | 290 |
| — Tension de vapeur à 20 °C | mbars | 0,000 21 |
| à 100 °C | mbars | 0,30 |
| à 200 °C | mbars | 57 |
| — Chaleur spécifique à 20 °C | kj/kg °C | 2,408 |
| — Chaleur de vaporisation à 55 °C | kj/kg | 955,5 |
| — Chaleur de vaporisation à 195 °C | kj/kg | 824,7 |
| — Point d'éclair | °C | 160 |
| — Viscosité à 20 °C | cP | 1 412 (1 412 mPa.s) |
| — Viscosité à 50 °C | | 142 |
| — Indice de réfraction | $n_D^{20}$ | 1,474 0 |

A titre d'exemple, on citera la glycérine de synthèse de SOLVAY, de SHELL ou de DOW.

2. Accélérateur de prise :

L'accélérateur de prise sera :

Soit un liant organique de la famille des amylacés,

Soit ce liant organique dont l'action sera complétée par un thermodurcisseur tel que phosphate d'alumine ou acide phosphorique ou silicate de soude ou de potasse pour des installations à forte contre pression et à grande capacité.

Le liant organique a été choisi dans la famille des amylacés en fonction de son haut pouvoir agglomérant et de sa bonne viscosité.

Pour obtenir un matériau à durcissement plus ou moins rapide, il conviendra de doser judicieusement l'accélérateur de prise.

On peut définir, à titre d'exemple :

— Une masse à durcissement normal :

Dans ce cas, le liant sera composé de :

— 90 % du produit de synthèse de la famille des glycérols,
— 10 % d'accélérateur de prise.

— Une masse à durcissement rapide :

Dans ce cas le liant sera composé de :

— 80 % de glycérol,
— 20 % d'accélérateur de prise.

Cette nouvelle masse de bouchage à donc notamment les avantages suivants :

1. Une plasticité constante quelles que soient les conditions atmosphériques ce qui facilite grandement le stockage et la conservation.

Cette même plasticité supprime toutes les préparations avant usage (réchauffage par exemple) et évite tout problème au moment de l'injection.

2. Le matériau reste stable jusqu'à une température de 150 °C, ce qui évite un durcissement à l'intérieur du cylindre de la boucheuse pouvant perturber le bon fonctionnement de l'appareil.

3. La présence d'un accélérateur de prise, réagissant à partir de 150°, permet d'obtenir une obturation efficace du trou de coulée après un temps très court libérant ainsi la boucheuse.

4. L'absence de goudron, de résines et de produits hydrocarbonés dans cette nouvelle masse évite la formation de poches gazeuses entraînant des flammes ou des projections de fonte.

5. La combinaison du liant glycérol et de l'accélérateur de prise apporte au matériau une résistance mécanique suffisante pour supporter l'érosion de la fonte et du laitier.

6. La nature des liants employés rend pratiquement nul le dégagement de vapeurs, gaz ou fumées.

7. L'infime dégagement de vapeurs, gaz ou fumées observé est non toxique et ne présente aucun danger pour l'utilisateur.

Il est indiqué ci-après quelques exemples de masses de bouchage relevant des compositions selon l'invention.

Exemple 1

10 % d'argile
65 % de sable siliceux
5 % de carbone végétal
17 % de glycérine
3 % d'accélérateur de prise.

Exemple 2

10 % d'argile
60 % de sable siliceux
5 % de zirkon
5 % de carbone végétal
17 % de glycérine
3 % d'accélérateur de prise.

Exemple 3

10 % d'argile
62 % de sable siliceux
5 % de corindon
5 % de carbone végétal
14 % de glycérine
4 % d'accélérateur de prise.

Exemple 4

10 % d'argile
60 % de sable siliceux
5 % de carbone végétal
5 % de chromite (ou bauxite)
16 % de glycérine
4 % d'accélérateur de prise.

Exemple 5

10 % d'argile
70 % de chamotte
5 % de carbone végétal
12 % de glycérine
3 % d'accélérateur de prise.

Exemple 6

10 % d'argile
70 % d'andalousite
5 % de carbone végétal
12 % de glycérine
3 % d'accélérateur de prise.

Exemple 7

10 % d'argile
60 % de bauxite
10 % de corindon
5 % de carbone végétal
12 % de glycérine
3 % d'accélérateur de prise.

Un certain nombre d'exemples ont été donnés pour illustrer la composition de masses de bouchage selon l'invention, il est cependant bien entendu que ceux-ci ne sont pas limitatifs.

Suivant les diverses sollicitations, il sera possible de moduler le pourcentage des liants et d'utiliser d'autres agrégats tels que magnésie, carbure de silicium, etc.

**Revendications**

1. Composition mixte pour le bouchage de trous de coulée de hauts-fourneaux, fours électriques et autres appareils de fusion, contenant des éléments minéraux de base, des matières carbonées et des liants, caractérisée en ce qu'elle est formée de 70 à 80 % d'éléments minéraux de base tels que argiles réfractaires ou agrégats réfractaires à haute résistance mécanique et pyroscopique, 5 à 15 % d'une matière carbonée d'origine végétale dont les éléments volatils nocifs ont été éliminés, 15 à 25 % de liants

composés de glycérol et d'accélérateur de prise complétant l'effet de liaison du glycérol.

2. Composition mixte selon la revendication 1 caractérisée en ce que la proportion de glycérol et d'accélérateur de prise dans les 15 à 25 % de liant est comme suit : 14 à 20 % de glycérol et 1 à 5 % d'accélérateur de prise.

3. Composition selon l'une quelconque des revendications 1 à 2, caractérisée par la présence d'un accélérateur de prise réagissant à partir de 150 °C permettant d'obturer efficacement le trou de coulée dans un délai très court libérant ainsi l'appareil de bouchage.

## Claims

1. Tap-hole plugging mixture for blast furnaces, electric furnaces and other melting apparatuses comprising basic mineral constituents, carbonaceous materials and binders, characterized in that it is formed of 70-80 % of basic mineral constituents such as refractory clays or refractory aggregates having a high mechanical and pyroscopic strength, 5 to 15 % of a carbonaceous material of vegetal origin from which the volatil noxious constituents have been eliminated, 15 to 25 % of binders composed of glycerol and setting accelerator completing the bonding effect of glycerol.

2. Mixture according to claim 1, characterized in that the ratio of glycerol and setting accelerator in the 15 to 25 % of binder is as follows : 14 to 20 % glycerol and 1 to 5 % setting accelerator.

3. Mixture according to anyone of the claims 1 to 2, characterized by the presence of a setting accelerator reacting as from 150 °C permitting to plug efficiently the tap-hole within a very short period thus liberating the plugging device.

## Ansprüche

1. Stichlochstopfgemisch für Hochöfen, Elektro-Öfen und andere Schmelzeinrichtungen, das mineralische Grundbestandteile, kohlenstoffhaltige Materialien und Bindemittel enthält, dadurch gekennzeichnet, daß es aus 70 bis 80 % mineralischen Grundbestandteilen, wie feuerfesten Tonen oder feuerfesten Zuschlagstoffen hoher mechanischer und thermischer Festigkeit, aus 5 bis 15 % eines Kohlenstoffhaltigen Materials pflanzlichen Ursprungs, dessen schädliche flüchtige Bestandteile eliminiert worden sind, und aus 15 bis 25 % Bindemitteln, die aus Glycerin und einem die Bindungswirkung des Glycerins ergänzenden Abbindebeschleuniger bestehen, gebildet ist.

2. Gemisch nach Anspruch 1, dadurch gekennzeichnet, daß der Anteil des Glycerins und des Abbindebeschleunigers in den 15 bis 25 % Bindemittel 14 bis 20 % Glycerin und 1 bis 5 % Abbindebeschleuniger beträgt.

3. Gemisch nach Anspruch 1 oder 2, gekennzeichnet durch das Vorhandensein eines Abbindebeschleunigers, der ab 150 °C reagiert, was gestattet, das Stichloch in sehr kurzer Zeit wirksam zu verschließen und so die Stopfvorrichtung freizumachen.